# FASCICULE DE BREVET EUROPEEN

(11) **EP 1 859 500 B1**
(45) Date de publication et mention de la délivrance du brevet: **22.09.2010**
(21) Numéro de dépôt: 06726245.1
(22) Date de dépôt: 14.03.2006
(51) Int. Cl.: H01M 8/02

(54) **PLAQUE BIPOLAIRE POUR PILE A COMBUSTIBLE A TOLE DE DISTRIBUTION METALLIQUE DEFORMEE**
BIPOLARPLATTE FÜR EINE BRENNSTOFFZELLE MIT METALLVERTEILUNGSDEFORMATIONS-PLATTENMETALL
BIPOLAR PLATE FOR FUEL CELL WITH DEFORMED METAL DISTRIBUTION PLATE METAL

(30) Priorité: 18.03.2005 FR 0550704
(43) Date de publication de la demande: 28.11.2007
(73) Titulaire: Commissariat à l'Énergie Atomique et aux Énergies Alternatives, 75015 Paris (FR)
(72) Inventeur: BLEIN, Franck, F-37550 Saint Avertin (FR)
(74) Mandataire: Poulin, Gérard
(86) Numéro de dépôt international: PCT/FR2006/050222
(87) Numéro de publication internationale: WO 2006/097658

(56) Documents cités:
- EP-A- 0 714 147
- EP-A- 1 445 814
- EP-A- 1 482 585
- PATENT ABSTRACTS OF JAPAN vol. 2000, no. 20, 10 juillet 2001 (2001-07-10) & JP 2001 068132 A (TOKYO GAS CO LTD), 16 mars 2001 (2001-03-16)

## Description

L'invention concerne le domaine des piles à combustible fonctionnant avec un électrolyte céramique, à haute température, mais également celui des électrolyseurs fonctionnant à haute température et dont le fonctionnement est inverse à celui de la pile à combustible.

### Art antérieur et problème posé

De nombreux types de piles à combustible sont constitués d'un empilement comprenant en alternance des éléments de base et des plaques polaires ou bipolaires. Chaque élément de base comprend une membrane prise en sandwich entre deux électrodes, à savoir une anode et une cathode, auxquelles sont apportés en permanence un comburant et un combustible, par exemple de l'hydrogène et de l'air. Les plaques bipolaires permettent d'assurer l'apport de ces comburant et combustible à la fois sur deux éléments de base adjacent chacun à cette plaque bipolaire.

Plusieurs concepts d'empilements existent dans les technologies mises en oeuvre jusqu'à présent.

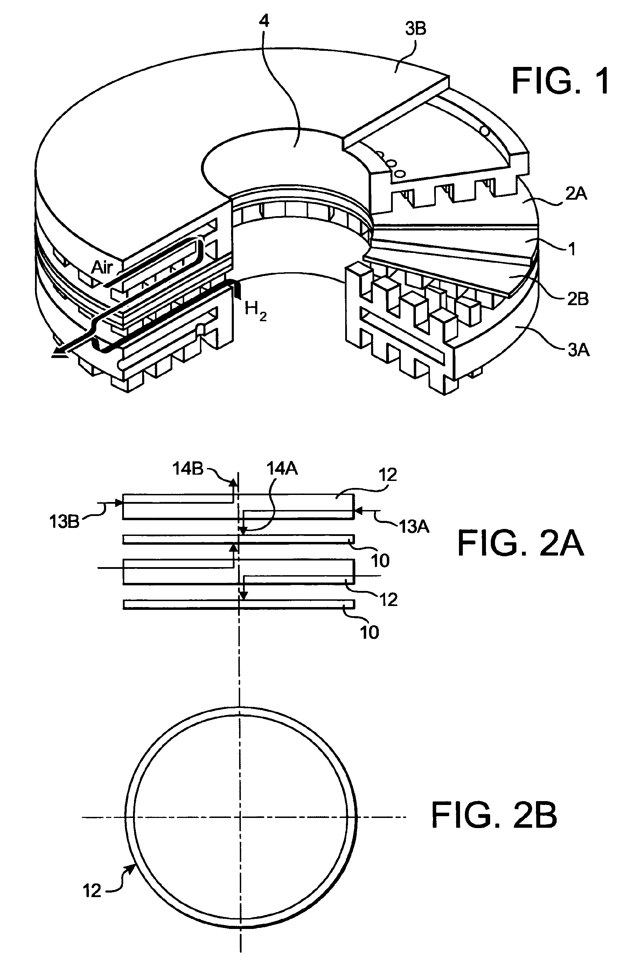

En référence à la figure 1, un premier concept consiste en un empilement d'éléments circulaires avec introduction des gaz combustible et carburant par au moins un point extérieur et un point central. Chaque élément de l'empilement, à savoir des éléments de base constitué d'un électrolyte 1 placé entre deux électrodes 2A et 2B et des plaques bipolaires 3A et 3B, sont de forme circulaire et possède un trou central 4. La plaque bipolaire 3A est une plaque placée entre deux éléments de base, tandis que la plaque polaire 3B est une plaque d'extrémité. Les flèches montrent les trajets de circulation de l'air et de l'hydrogène, chacun dans un circuit particulier de la plaque bipolaire. On constate que l'hydrogène est introduit par le trou central 4 et est évacué vers l'extérieur, tandis que l'air est introduit de l'extérieur et évacué vers l'extérieur. L'inconvénient principal de cette architecture est le fait que l'hydrogène est introduit par la zone centrale, ce qui oblige d'assurer une bonne étanchéité au niveau de chaque élément de base entre la cathode 2A et le trou central 4. Une fuite à ce niveau occasionnerait une combustion entre l'hydrogène et l'air du compartiment cathodique, ce qui entraînerait une élévation importante de température pouvant entraîner une fissuration de matériau céramique et dégrader ainsi les performances de la pile.

Un autre concept consiste à introduire l'air et l'hydrogène par le centre de la pile, c'est-à-dire au centre de chaque étage élémentaire. Les gaz résiduels sont brûlés à la sortie périphérique de la pile. Ce type de concept présente les mêmes inconvénients que pour celui représenté à la figure 1, mis à part que la zone de combustion n'est pas au contact direct des éléments actifs de la pile.

Enfin, un troisième type de concept prévoit que, pour des éléments de base à géométrie circulaire plane, l'introduction des gaz se fasse de l'extérieur de la pile. Toutefois, le choix des matériaux céramiques pour assurer cette fonction oblige à disposer les arrivées de gaz à proximité de la périphérie des zones actives et peut s'avérer pénalisant, en cas de perte d'étanchéité et de mise en communication depuis l'alimentation en air et en hydrogène. Là encore, l'apparition de points chauds locaux risque de faire fissurer les pièces de l'empilement.

Le but de l'invention est de remédier à tous ces inconvénients et de proposer un concept différent d'alimentation en combustible et en carburant pour un empilage de piles à combustible.

### Résumé de l'invention

Un premier objet principal de l'invention est donc une plaque bipolaire pour pile à combustible, destinée être montée entre deux éléments de base électrode/membrane/électrode et possédant au moins deux trous d'alimentation placés de façon périphérique.

Selon l'invention, la plaque est constituée d'un séparateur rigide métallique adjacent à au moins un premier distributeur rigide métallique constitué d'une tôle déformée, de façon à former une canalisation de distribution de chaque côté de la plaque, reliées l'une à l'autre par un trou central de façon à ne former qu'une seule canalisation traversant le distributeur et ayant une première extrémité reliée à un trou d'alimentation.

Dans une première réalisation principale de l'invention, on dispose de deux premiers distributeurs de chaque côté du séparateur.

De préférence, ces deux distributeurs sont identiques.

Dans ce cas, il est possible qu'une deuxième extrémité d'au moins une canalisation ainsi formée débouche à l'extérieur de la plaque polaire.

Dans ce premier cas, il est avantageux de disposer un anneau de garde dans la canalisation ainsi formée.

Il est également possible qu'une deuxième extrémité d'au moins une canalisation ainsi formée débouche dans un trou d'évacuation périphérique. Il est donc possible de posséder deux types d'évacuation différentes sur une plaque bipolaire.

Dans une deuxième réalisation préférentielle de la plaque selon l'invention, on utilise un deuxième distributeur constitué d'un cadre rigide et métallique en forme de cuvette à l'intérieur duquel se trouve un support poreux anodique, ce deuxième distributeur comportant un passage de sortie périphérique reliant le support poreux à un trou d'évacuation périphérique, le séparateur possédant dans ce cas un canal d'alimentation reliant un trou d'alimentation au centre de ce séparateur, de façon à déboucher contre le support poreux.

Dans l'utilisation de la plaque polaire selon l'invention, il est prévu d'utiliser un joint périphérique lors de la constitution de l'empilement d'une pile à combustible, entre chaque plaque bipolaire selon l'invention et les éléments de base au niveau de l'anneau de garde et un joint autour des trous d'alimentation et/ou d'évacuation.

Dans ce cas, il préférable de prévoir les joints en mica.

### Liste des figures

L'invention et ses différentes caractéristiques techniques seront mieux comprises à la lecture de la description, accompagnée de plusieurs figures représentant respectivement :
- figure 1, déjà décrite, en vue cavalière éclatée, un concept de pile à combustible selon l'art antérieur ;
- figures 2A et 2B, deux schémas relatifs au mode de fonctionnement d'une plaque bipolaire selon l'invention ;
- figures 3A et 3B, une coupe et une vue de dessus de deux plaques bipolaires selon une première réalisation de l'invention ;
- figure 4, en coupe, trois étages de piles à combustible utilisant des plaques bipolaires selon la réalisation représentée aux figures 3A et 3B ;
- figures 5A, 5B et 5C, en coupe et en vue de dessus, trois étages d'un empilement de piles à combustible utilisant des plaques bipolaires selon l'invention dans une deuxième réalisation de celles-ci ;
- figures 6A, 6B et 6C, en coupe et en vue de dessus, trois étages d'un empilement de piles à combustible utilisant une plaque bipolaire dans une troisième réalisation de l'invention.

### Description détaillée de plusieurs réalisations de l'invention

En référence aux figures 2A et 2B, la géométrie des éléments de base 10 et des plaques bipolaires 12 selon l'invention est circulaire. Des électrodes de chaque élément de base 10 sont alimentées respectivement par le dessus et le dessous au moyen chacune d'une plaque bipolaire 12 de même géométrie circulaire. Des alimentations en combustible et carburant, à savoir de l'hydrogène ou de l'air, sont faites depuis l'extérieur de l'assemblage et amenées au centre de chaque électrode au moyen d'une plaque bipolaire 12. Par exemple, l'hydrogène alimente une électrode placée au-dessus de la plaque bipolaire 12 concernée tandis que l'air alimente l'électrode placée en dessous de cette plaque bipolaire 12.

Par ce principe, la difficulté de devoir réaliser l'étanchéité d'un éventuel puits central d'alimentation en air ou en hydrogène est évitée. Les éléments de base 10 et les plaques bipolaires 12 peuvent être du même diamètre.

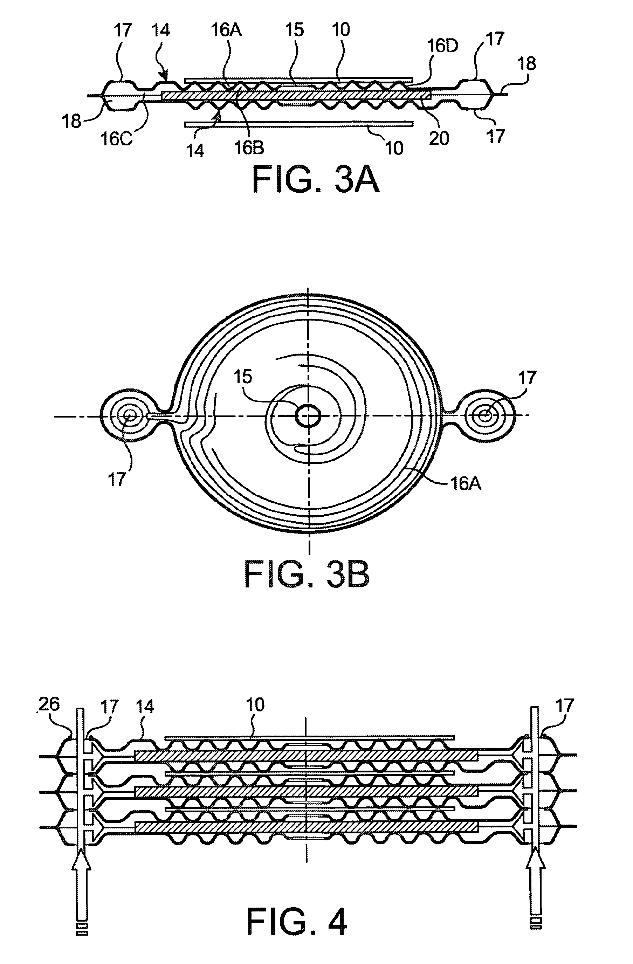

En référence aux figures 3A ou 3B, chaque plaque bipolaire selon l'invention est constituée d'un unique séparateur 20, métallique et rigide, constitué d'une tôle plane et permettant d'assurer la rigidité mécanique de l'ensemble. Celui-ci est pris en sandwich entre deux distributeurs 14 métalliques et rigides, constitués chacune d'une tôle ondulée qui peut être obtenue, par exemple, par emboutissage. Ainsi, le distributeur 14 possède sur chaque face des canaux 16A et 16B correspondant respectivement aux séparations existants entre les parties du canal formé sur l'autre face. En d'autres termes, la tôle ondulée constituant chaque distributeur 14 a des faces ayant chacune une forme complémentaire. Ceci présente un grand avantage qui est de pouvoir constituer tous les distributeurs par un seul type de distributeur. En d'autres termes, une unique sorte de pièce est conçue pour réaliser ces éléments.

D'autre part, les canaux 16A et 16B sont constitués chacun d'un seul canal, par exemple disposé en spirale autour du centre et aboutissant à ce dernier. La figure 3B montre une telle configuration. Or, chaque séparateur 14 possède, en son centre, un trou de distribution 15 auquel sont raccordés les deux canaux 16A et 16B. Du fait de cette communication, chaque distributeur possède en fait qu'un seul canal traversant sa paroi. Un des deux canaux, en l'occurrence le canal 16B, possède une extrémité périphérique 16C débouchant dans un évidement périphérique 18 du distributeur. De son côté, l'autre canal 16A possède une extrémité opposée 16D débouchant à l'extérieur de l'empilement. On conçoit que, une fois ainsi empilé entre un élément de base 10 et un séparateur 20, chaque unique canal composé de la succession de canaux 16A et 16B puisse faire circuler un gaz provenant de l'évidement périphérique 18 et étant évacué vers l'extérieur par l'extrémité 16D du canal 16A débouchant vers l'extérieur. Comme, au niveau de chaque évidemment 18, se trouve un trou d'alimentation 17, on comprend que, soit de l'air, soit de l'hydrogène, puisse être envoyé contre chaque face d'un élément de base 10 de la pile à combustible ainsi constitué. Le fonctionnement de la pile se complète par un collectage de courant électrique non représenté et disposé au voisinage d'une des deux électrodes. Les deux distributeurs 14 peuvent être assemblés par brasage, de façon périphérique, autour du séparateur 20 qui est alors enfermé. Le trou de distribution 15 qui permet au canal de passer d'un côté à l'autre du distributeur est central. En effet, cela permet d'utiliser toute la surface réactive de l'élément de base 10 (électrode/membrane/électrode). Lors du fonctionnement, il y a dégagement de chaleur. Par une alimentation centrale, on conserve la symétrie de révolution même pour la cartographie de température (plus chaud au centre et plus froid vers l'extérieur,de manière concentrique).

Afin de constituer un empilement permettant d'augmenter la puissance d'une pile à combustible, il suffit d'empiler les différents sous-ensembles ainsi constitués d'une plaque bipolaire et d'un élément de base électrode/membrane/électrode, les uns sur les autres. Les puits d'alimentation en air ou en hydrogène se constituent ainsi au fur et à mesure du montage, par superposition des trous d'alimentation 17.

En référence à la figure 4, un tel empilement constitué d'une série d'éléments de base électrode/membrane/électrode 10 et de plaques bipolaires, telles qu'elles viennent d'être décrites, doit posséder une certaine étanchéité.

A cet effet, au niveau des trous d'alimentation 17, un joint d'étanchéité 26 est placé autour du trou d'alimentation 17 sur la face de la plaque bipolaire 14 qui se trouve en regard d'un élément de base électrode/membrane/électrode 10. Un tel joint 26 peut être en mica ou être déposé par plasma. On remarque que si des fuites se produisent à ce niveau, elles sont localisées dans une zone externe à la partie active ou fonctionnelle de la pile à combustible et n'ont donc pas d'impact sur l'intégrité de l'élément de base électrode/membrane/électrole 10. De plus, ce type de joint 26 assure à la fois l'isolation électrique et l'étanchéité par rapport au gaz.

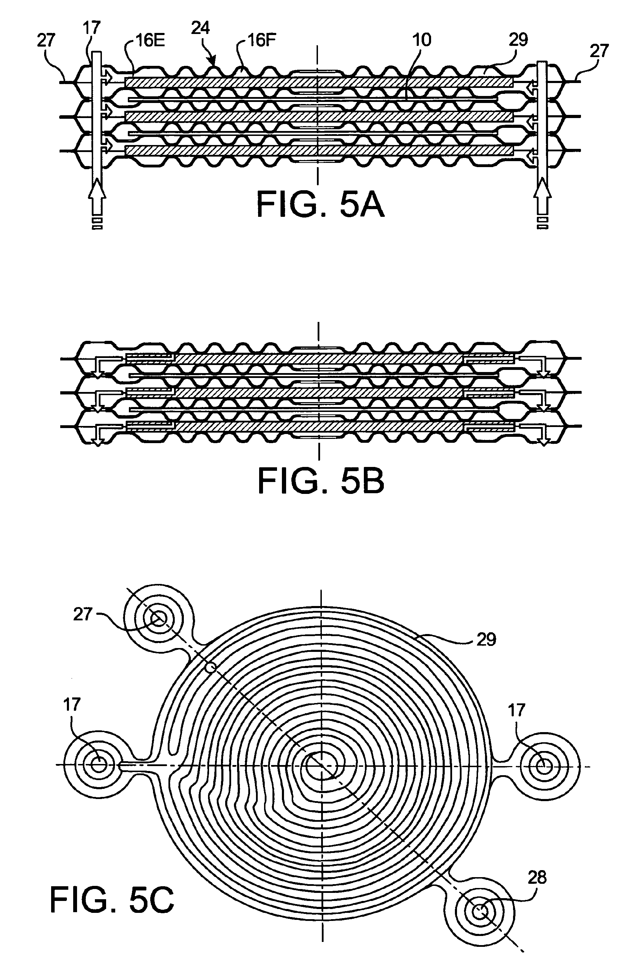

En référence aux figures 5A, 5B et 5C, une deuxième réalisation du concept de pile à combustible selon l'invention prévoit que les gaz carburant et combustible ainsi que leur produit résiduel, après réaction, soient récupérés, c'est-à-dire collectés, de façon séparée, l'étanchéité étant assurée entre la zone de fonctionnement de la pile à combustible et l'extérieur de l'empilement. La figure 5C montre, non seulement les trous d'alimentation 17, mais également les trous d'évacuation 28 configurés de façon analogue et reliés chacun à la sortie d'une canalisation de chaque étage constitué par les deux côtés d'un distributeur 24.

Contrairement à la réalisation précédente, aucune issue n'est possible en périphérie pour les gaz résiduels et le combustible et le carburant à la sortie de la canalisation de distribution. Un anneau de garde 29, constitué par le dernier cercle de la forme spirale de la canalisation, formé par la déformation de ce distributeur 24 et une deuxième extrémité 16E du canal de distribution 16F permettent de relier cette dernière au trou d'évacuation 28. Au niveau de l'anneau de garde 29, un joint est placé sur la surface devant être en contact avec l'élément de base électrode/membrane/électrode 10, de manière à assurer l'étanchéité de l'ensemble de l'empilement. En d'autres termes, un joint est placé sur chaque face de l'élément de base électrode/membrane/électrode 10, dans sa périphérie.

On peut également envisager de ne récupérer que le combustible et de laisser s'échapper le comburant. Dans ce cas là, les distributeurs d'une même plaque bipolaire sont différents.

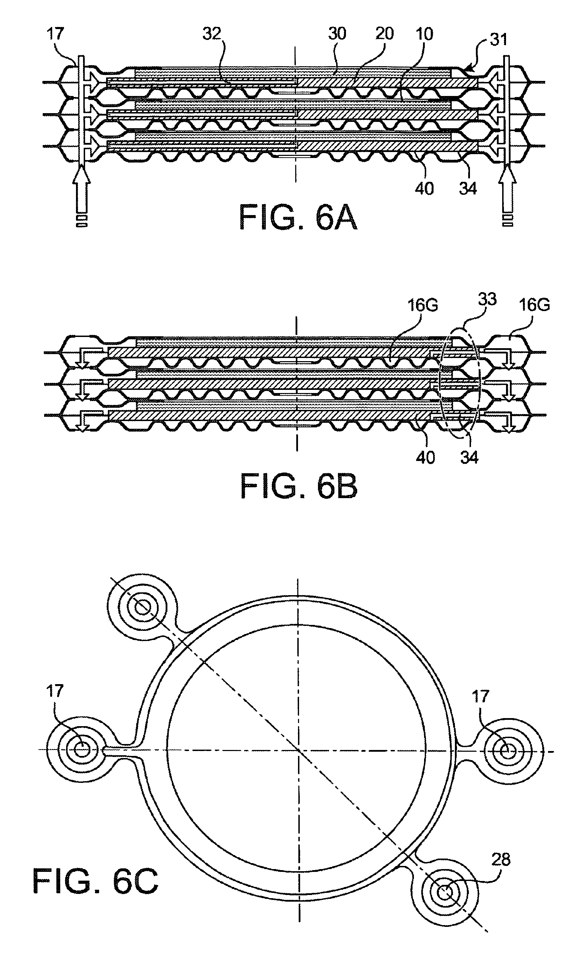

En référence aux figures 6A, 6B et 6C, une réalisation selon l'invention prévoit de n'utiliser qu'un seul distributeur tel qu'il vient d'être décrit. Dans ce cas, on utilise un deuxième type de distributeur 30 constitués d'un support poreux, de manière à ce que le gaz combustible ou carburant puisse circuler sur tout le volume de ce support poreux et être en contact avec une électrode de l'élément de base 10 électrode/membrane/électrode. Ce support poreux 30 se complète d'un cadre périphérique 31 qui a la même forme, au niveau des trous d'alimentation 17 et de sortie 28. Dans ce cas, le séparateur 40 possède un canal d'évacuation 34 du canal de distribution 16G vers le puits d'évacuation.

Ce support poreux 30, est soit assemblé sur le séparateur 20, soit déposé par une technique de revêtement. Le matériau est soit un conducteur électronique soit un conducteur mixte, c'est-à-dire électronique et ionique.

La séparation du compartiment anodique avec l'extérieur et du compartiment cathodique avec l'extérieur est assurée dans ce cas également au moyen d'un joint isolant électrique entre deux plaques bipolaires au niveau de la zone 33, c'est-à-dire à l'endroit de la jonction entre le support poreux 30 et son cadre 31. Cette réalisation permet d'assurer un très bon contact électrique entre la plaque bipolaire et le support poreux 30 qui la constitue partiellement et sur lequel est déposé une électrode de l'élément de base 10 électrode/membrane/électrode soit directement sur l'électrolyte au cas où se support poreux 30 est constitué à la fois d'un conducteur ionique et électronique.

Dans cette réalisation, le séparateur 20 possède un canal d'alimentation 32 débouchant vers le centre de la plaque bipolaire et vers un trou d'alimentation 17.

### Avantages de l'invention

Dans les réalisations proposées selon l'invention, on permet de s'affranchir des problèmes d'étanchéité au niveau de l'hydrogène tout en gardant un montage simplifié de l'empilement.

Les zones d'étanchéité sont en parties déportées par rapport aux zones fonctionnelles de la pile. Le nombre d'entrées et de sortie peut être réduit au nombre d'une entrée et d'une sortie par compartiment.

La forme spirale pour la canalisation de distribution a été proposée dans cette réalisation, d'autres formes peuvent être envisagées, dès l'instant que le principe de constitution des puits d'alimentation et de sortie et de séparation d'étanchéité pour les gaz de sortie est conservé.

Ce concept permet de réduire substantiellement les coûts de fabrication d'une plaque bipolaire. En effet, dans la première réalisation, la plaque bipolaire n'est constituée que de deux éléments différents, à savoir un séparateur et deux distributeurs. Ces derniers peuvent être obtenus facilement par emboutissage, ce qui réduit considération les coûts de fabrication.

L'invention s'applique particulièrement aux piles du type SOFC (Solid Oxide Fuell Cell).

Le concept est indépendant de la nature du combustible utilisé du côté anodique (hydrogène, méthane, hydrocarbure, etc.) et peut fonctionner avec introduction d'air ou d'oxygène côté cathodique.

Le principe est également utilisé sur des piles à combustible du type PCFC (Proton Ceramic Fuell, Cell).

Enfin, en envisageant de mettre en oeuvre le fonctionnement inverse d'une pile à combustible, il est possible de concevoir un électrolyseur haute température pour produire de l'hydrogène par dissociation de molécules d'eau sous courant électrique. Néanmoins, seule la version avec séparation des gaz en sortie est applicable à un tel électrolyseur. On note que à la fois le mode "anode oxygène" et le mode "anode dépolarisée" peut être mis en oeuvre, soit par un mode allo-thermique, soit par un mode auto-thermique.

## Revendications

1. Plaque bipolaire pour pile à combustible destinée à être montée entre deux éléments de base (10) électrode/membrane/électrode, possédant au moins deux trous d'alimentation (17) placés de façon périphérique, **caractérisée en ce qu'**elle est constituée d'un :
- un séparateur (20) rigide, métallique ; et
- au moins un premier distributeur (14) rigide, métallique en tôle déformée, de façon à ce que sa forme constitue une canalisation de distribution (16A, 16B) de chaque côté de cette tôle, et possédant un trou de distribution (15) auquel aboutit une première extrémité de chaque canalisation de distribution (16A, 16B), de façon à ne former qu'une seule canalisation traversant le distributeur (14).

2. Plaque bipolaire selon la revendication 1, **caractérisée en ce que** le trou de distribution (15) est central.

3. Plaque bipolaire selon la revendication 1, **caractérisée en ce qu'**elle comprend au moins deux distributeurs (14) placés chacun d'un côté du séparateur (20).

4. Plaque bipolaire selon la revendication 3, **caractérisée en ce que** les deux distributeurs (14) sont identiques.

5. Plaque bipolaire selon la revendication 1, **caractérisée en ce qu'**une deuxième extrémité (16C) d'au moins une canalisation (16A, 16B) débouche à l'extérieur de la plaque bipolaire ainsi formée.

6. Plaque bipolaire selon la revendication 1 ou 5, **caractérisée en ce qu'**une deuxième extrémité (16E) d'au moins une canalisation de distribution (16F) est en communication avec un trou d'évacuation (17) périphérique.

7. Plaque bipolaire selon la revendication 5, **caractérisée en ce qu'**il comprend un anneau de garde (29) constituant la périphérie de la canalisation de distribution (16F).

8. Plaque bipolaire selon la revendication 1, **caractérisée en ce qu'**il comprend un deuxième distributeur d'un deuxième type constitué d'un cadre métallique (31) en forme de cuvette au milieu duquel se trouve un support poreux (30), le séparateur (20) possédant un passage de sortie périphérique (32) reliant le support poreux (30) à un trou d'alimentation (17) périphérique et un canal d'évacuation (34) reliant le canal de distribution (16G) à un trou d'évacuation (28).

9. Pile à combustible constituée d'un empilement de plusieurs plaques bipolaires selon l'une quelconque des revendications précédentes, ainsi que d'éléments de base (10) électrode/membrane/électrode.

10. Pile à combustible selon la revendication 9, **caractérisée en ce qu'**on utilise au moins un joint d'étanchéité électrique et gazeuse (26) entre les plaques bipolaires et les éléments de base (10) électrode/membrane/électrode.

## Claims

1. Bipolar plate for fuel cell intended to be fitted between two basic electrode/membrane/electrode elements (10), comprising at least two supply holes (17) positioned peripherally,
**characterised in that** it consists of:
- a rigid metal separator (20) ; and
- at least one first rigid metal distributor (14) made of a reformed sheet, such that its shape forms a distribution duct (16A, 16B) of each side of said sheet, and comprising a distribution hole (15) reached by a first end of each distribution duct (16A, 16B), so as only to form a single duct passing through the distributor (14).

2. Bipolar plate according to claim 1, **characterised in that** the distribution hole (15) is central.

3. Bipolar plate according to claim 1, **characterised in that** it comprises at least two distributors (14) each positioned on one side of the separator (20).

4. Bipolar plate according to claim 3, **characterised in that** both distributors (14) are identical.

5. Bipolar plate according to claim 1, **characterised in that** a second end (16C) of at least one duct (16A, 16B) opens to the outside of the bipolar plate formed in this way.

6. Bipolar plate according to claim 1 or 5, **characterised in that** a second end (16E) of at least one distribution duct (16F) is connected to the peripheral evacuation hole (17).

7. Bipolar plate according to claim 5, **characterised in that** it comprises a retaining ring (29) forming the periphery of the distribution duct (16F).

8. Bipolar plate according to claim 1, **characterised in that** it comprises a second distributor of a second type consisting of a metal frame (31) in the shape of a trough at the centre of which a porous substrate (30) is located, the separator (20) comprising a peripheral outlet passage (32) connecting the porous substrate (30) to a peripheral supply hole (17) and an evacuation channel (34) connecting the distribution channel (16G) to an evacuation hole (28).

9. Fuel cell consisting of a stack of several bipolar plates according to any of the abode claims, along with basic electrode/membrane/electrode elements (10).

10. Fuel cell according to claim 9, **characterised in that** at least one electrical and gas tightness seal (26) is used between the Bipolar plates and the basic electrode/membrane/electrode elements (10).

## Patentansprüche

1. Bipolarplatte für eine Brennstoffzelle, bestimmt zum Einbau zwischen zwei ElektrodelMernbranlElektrode-Basiselemente (10), mindestens zwei peripher angeordnete Einspeisungslöcher (17) umfassend,
**dadurch gekennzeichnet, dass** sie gebildet wird durch:
- einen steifen metallischen Separator (20); und
- wenigstens einen ersten steifen metallischen Verteiler (14) aus Blech, der so geformt ist, dass seine Form auf jeder Seite dieses Blechs eine Verteilungskanalisierung (16A, 16B) bildet, und der ein Verteilungsloch (15) besitzt, in dem ein erstes Ende jeder Verteilungskanalisierung (16A, 16B) endet, um nur eine einzige den Verteiler (14) durchquerende Kanalisierung auszubilden.

2. Bipolarplatte nach Anspruch 1, **dadurch gekennzeichnet, dass** das Verteilungsloch (15) zentral ist.

3. Bipolarplatte nach Anspruch 1, **dadurch** gekenntzeichnet, dass sie wenigstens zwei Verteiler (14) umfasst, jeweils einen auf jeder Seite des Separators (20).

4. Bipolarplatte nach Anspruch 3, **dadurch gekennzeichnet, dass** die beiden Verteiler (14) identisch sind.

5. Bipolarplatte nach Anspruch 1, **dadurch gekennzeichnet, dass** ein zweites Ende (16C) von wenigstens einer Kanalisierung (16A, 16B) außerhalb der Bipolarplatte mündet.

6. Bipolarplatte nach Anspruch 1 oder 5, **dadurch gekennzeichnet, dass** ein zweites Ende (16E) von wenigstens einer Verteilungskanalisierung (16F) mit einem peripheren Entleerungsloch (17) verbunden ist.

7. Bipolarplatte nach Anspruch 5, **dadurch gekennzeichnet, dass** sie einen die Peripherie der Verteilungskanalisierung (16F) bildenden Schutzring (29) umfasst.

8. Bipolarplatte nach Anspruch 1, **dadurch gekennzeichnet, dass** sie einen zweiten Verteiler eines zweiten Typs umfasst, gebildet durch einen wannenförmigen metallischen Rahmen (31), in dessen Mitte sich ein poröser Träger (30) befindet, wobei der Separator (20) einen peripheren Ausgang (32) besitzt, der den porösen Träger (30) mit einem peripheren Einspeisungsloch (17) verbindet und einen Entleerungskanal (34), der den Verteilungskanal (16G) mit einem Entleerungsloch (28) verbindet.

9. Brennstoffzelle, gebildet durch einen Stapel aus mehreren Bipolarplatten nach einem der vorhergehenden Ansprüche sowie aus Elektrode/Membran/Elektrode-Basiselementen (10).

10. Brennstoffzelle nach Anspruch 9, **dadurch** gekenntzeichnet, dass man zwischen den Bipolarplatten und den Elektrode/Membran/Elektrode-Basiselementen (10) wenigstens eine Dichtung (26) gegen elektrischen Strom und Gas verwendet.
